# EUROPÄISCHE PATENTANMELDUNG

(11) **EP 4 675 143 A1**
(43) Veröffentlichungstag der Anmeldung: **07.01.2026**
(21) Anmeldenummer: 25187224.8
(22) Anmeldetag: 03.07.2025
(51) Int. Cl.: F16L 23/06

(54) **KLEMMSCHELLE**

(30) Priorität: 03.07.2024 DE 102024118841
(71) Anmelder: TROESTER GmbH & Co. KG, 30519 Hannover (DE)
(72) Erfinder: Rennemann, Jörn, 31180 Giesen (DE); Matz, Kurt, 30916 Isernhagen (DE)
(74) Vertreter: Scheffler, Jörg

(57) **Zusammenfassung**

Die Erfindung betrifft eine Klemmschelle (1), zur kraft- und/oder formschlüssigen Verbindung zweier Leitungen über deren Flansche, mit zwei über ein Gelenk (2) gegenüber einander schwenkbeweglich und/oder drehbeweglich ausgeführten Schellarmen (3), wobei die Schellarme (3) über eine Koppeleinrichtung miteinander verbunden sind. Hierbei ist die Koppeleinrichtung eine Synchronisierungsmechanik (4), welche ein stets simultanes Schwenken und/oder Drehen beider Schellarme (3) erzwingt.

## Beschreibung

Die Erfindung betrifft eine Klemmschelle mit zwei über ein Gelenk gegenüber einander schwenkbeweglich und/oder drehbeweglich ausgeführten Schellarmen, wobei die Schellarme über eine Koppeleinrichtung miteinander verbunden sind.

Verbindungen, insbesondere zwischen stoßend aneinanderliegenden Leitungen oder Leistungsabschnitten, wie zum Beispiel Rohrverbindungen, für den Transport verschiedener Medien, auch z. B. zwischen Teilen einer maschinellen Einrichtung, werden oft durch Flansche hergestellt. Insbesondere bei hohen Innendrücken werden die Flansche in der Regel an mehreren Stellen miteinander verschraubt, um eine sichere Verbindung zu gewährleisten. Diese Verschraubung ist jedoch zeitaufwendig beim Etablieren und Lösen, was sie ungeeignet macht für Verbindungen von Leitungen, die regelmäßig gelöst und wieder hergestellt werden müssen, beispielsweise, um die Leitungen gegenüber einander verschwenken zu können.

Eine Möglichkeit, eine Leitungs-Verbindung über Flansche zu gestalten, die sich leicht und wiederholt lösen und befestigen lässt, besteht darin, eine Klemmschelle mit Spannarmen anzuordnen. Diese umschließen die Flansche und können über einen Hebelverschluss vergleichsweise einfach geöffnet und geschlossen werden. Eine Problematik, welche sich hierbei ergibt, ist, dass beim Öffnen der Klemmschelle oftmals einer der Spannarme weiterhin auf den Flanschen stecken bleibt. Die notwendige Kraft zum Ablösen des verbliebenen Spannarms, somit dem vollständigen Öffnen der Klemmschelle und dem damit zusammenhängenden Lösen der Verbindung der Flansche ist dabei sehr hoch.

Um diese Problematik zu adressieren, sind aus dem Stand der Technik bereits Lösungsansätze bekannt, wobei aus der in einem angrenzenden technischen Bereich anzusiedelnden DE 36 10 836 C2 eine Vorrichtung zum axialen Aneinanderfügen von Rohren hervorgeht, wofür die Vorrichtung zwei axial verstellbare und zueinander beabstandete Rohrgreifzangen aufweist. Eine jeweilige Rohrgreifzange verfügt wiederum über zwei Spannarme, die jeweils oberhalb eines Achslagers positioniert sind, welches den gemeinsamen Schwenkpunkt bildet. An den Verlängerungen der Spannarme sind Befestigungslöcher ausgeführt, in denen ein hydraulischer Spannzylinder befestigt ist, um die Verlängerungen miteinander zu verbinden. Der Spannzylinder fungiert als Druckzylinder, der durch Ausfahren seiner Kolbenstange die Verlängerungen auseinanderdrückt und somit die Spannarme gegeneinander bewegt. Zur Energieversorgung des hydraulischen Spannzylinders ist auf der Oberseite des äußeren Traversenteils, welches die Rohrgreifzangen verbindet, ein Hydraulikaggregat angeordnet. Die Ausführung eines solchen Spannzylinders ist aufgrund der notwendigen Hydraulik und damit verbundenen Anordnung eines Hydraulikaggregats als nachteilig anzusehen. Neben dem hohen Bauraumbedarf besteht die Notwendigkeit eines regelmäßigen Austauschs von Hydraulikflüssigkeit sowie -schläuchen und damit ein hoher Wartungsaufwand. Weiterhin erfolgt häufig eine Kontamination der Umgebung, insbesondere der Umgebungsluft mit der Hydraulikflüssigkeit, welche in der Regel ein Hydrauliköl ist. Das Hydraulikaggregat erzeugt zudem einen hohen Geräuschpegel und muss auch in Ruhestellungen der Rohrgreifzange mit Energie versorgt werden. Darüber hinaus kann auch durch die Kopplung des Spannzylinders mit den Verlängerungen der Spannarme nicht gewährleistet werden, dass beide Spannarme stets zusammen verschwenkt werden.

Die DE 20 2012 000 584 U1 beschreibt zudem eine vergleichbare Vorrichtung zum Verbinden von Rohren, wobei diese Vorrichtung über eine Hebestange manuell bedienbar ist.

Darüber hinaus gibt die DE 35 20 952 C1 eine Schlauchkupplung in Form einer Klemmschelle mit zwei Teilschalen wieder, wobei die Teilschalen über einen Gelenkbolzen schwenkbar miteinander verbunden sind. Die Öffnung auf der gegenüberliegenden Seite des Gelenkbolzens wird durch eine Schließfeder überbrückt. Diese Schließfeder ist mit einem Ende an einem als Kniehebel ausgeführten Spannhebel befestigt, der an einer der Teilschalen angelenkt und mit dem anderen Ende in einen Schlitz in der weiteren Teilschale eingeführt ist. Ferner liegt eine Schenkelfeder mit je einem Schenkel an einer jeweiligen Teilschale der Schelle an. Beim Öffnen der Klemmschelle bewirken die unter Spannung an den Teilschalen anliegenden Schenkel der Schenkelfeder somit, dass diese gemeinsam gespreizt werden. In nachteiliger Weise kann die hierbei über die Schenkelfeder auf die Teilschalen aufbringbare Kraft zu gering sein, um ein Ablösen einer solchen Klemmschelle von miteinander verbundenen Flanschen und somit ein vollständiges Lösen der Verbindung stets gewährleisten zu können.

Vor diesem Hintergrund liegt der Erfindung die Aufgabe zugrunde, eine Klemmschelle der eingangs genannten Art derart auszugestalten, dass ein vollständiges Öffnen der Klemmschelle und somit ein Lösen von den Flanschen der Leitungen stets gewährleistet werden kann.

Diese Aufgabe wird erfindungsgemäß mit einer Klemmschelle gemäß den Merkmalen des Anspruchs 1 gelöst. Die weitere Ausgestaltung der Erfindung ist den Unteransprüchen zu entnehmen.

Erfindungsgemäß ist also eine Klemmschelle, hierbei insbesondere eine Flanschschelle, zur kraft- und/oder formschlüssigen Verbindung zweier Leitungen über deren - endseitige - Flansche vorgesehen, wobei die Klemmschelle zwei über ein - gemeinsames - Gelenk gegenüber einander schwenkbeweglich und/oder drehbeweglich ausgeführte Schellarme aufweist.

Die Schellarme sind hierbei im Wesentlichen gekrümmt ausgebildet und/oder weisen innenseitig Flanschaufnahmen auf, über welche die Flansche der Leitungen zumindest abschnittweise umfassbar sind.

Erfindungsgemäß sind die Schellarme darüber hinaus über eine Koppeleinrichtung miteinander verbunden, wobei diese Koppeleinrichtung als eine Synchronisierungsmechanik ausgeführt ist, die ein insbesondere stets simultanes Schwenken und/oder Drehen beider Schellarme erzwingt.

Über die Synchronisierungsmechanik lässt sich somit sicherstellen, dass sich die Schellarme stets simultan bewegen, d. h. verschwenkt und/oder verdreht werden und sich somit auch die Klemmschelle selbst stets vollständig schließt und/oder öffnet, wodurch zudem ein Lösen der Klemmschelle von den Flanschen der Leitungen stets gewährleistet werden kann.

In einer Ausführungsform der Erfindung ist darüber hinaus angedacht, dass die Klemmschelle einen mit den Schellenarmen verbundenen Hebelverschluss aufweist, über welchen Schließ- und/oder Öffnungskräfte auf die Schellarme übertragbar sind. Der Hebelverschluss bewirkt hierbei in vorteilhafter Weise, dass lediglich vergleichsweise geringe Bedienkräfte aufgebracht werden müssen, um hohe Schließ- und/oder Öffnungskräfte zu erzeugen, die auf die Schellarme übertragen werden. Der Hebelverschluss ist dabei bevorzugt an den Enden respektive Endbereichen der Schellarme angebunden, welche nicht mit dem Gelenk verbunden sind und überspannt somit einen ausgebildeten oder ausbildbaren Bereich der Klemmschelle, welcher dem Gelenk gegenüberliegt. Der Hebelverschluss ist in bevorzugter Ausgestaltung zudem ein Kniehebelverschluss.

Als überaus vorteilhaft stellt sich eine Weiterbildung der Erfindung weiterhin dann dar, wenn der Hebelverschluss mittels eines Antriebs verstellbar ausgebildet ist, sodass über den Hebelverschluss zumindest eine Offenstellung und/oder Geschlossenstellung der Klemmschelle und/oder Schellarme ausbildbar ist. Durch die Ausführung eines Antriebs, über den der Hebelverschluss verstellbar ist, also insbesondere geöffnet und geschlossen werden kann, lässt sich eine deutliche Steigerung der Sicherheit erzielen. Es kann insbesondere vermieden werden, dass der Hebelverschluss, beispielsweise bei unter einem Druck respektive einem Restdruck stehenden und über die Klemmschelle verbundenen Leitungen, beim Öffnen aufschlägt und somit vor allem bei einer manuellen Bedienung Personenschäden auftreten. Der Antrieb könnte hierfür selbsthemmend ausgebildet sein und/oder ein selbsthemmendes Getriebe aufweisen.

So ist es, insbesondere in Zusammengang mit der vorstehenden Weiterbildung, auch als überaus sicher anzusehen, wenn in einer Ausführungsform der Erfindung angedacht ist, dass der Antrieb manuell betreibbar und/oder betrieben ist. Ein manuelles Betreiben bietet hierbei unter anderem den Vorteil, dass der Antrieb ohne das Vorhandensein elektrischer Energie verstellt und die Klemmschelle somit verschlossen und/oder geöffnet werden kann. So ist beispielsweise auch stets eine Notöffnung der Klemmschelle ermöglicht. Darüber hinaus besteht die Möglichkeit, den Antrieb in einem möglichst geringen Bauraum unterzubringen und dadurch eine kompaktere und/oder stabilere Bauweise der Klemmschelle bereitstellen zu können.

Insbesondere durch die Ausführung eines Hebelverschlusses ist in einer ebenso vorteilhaften Weiterbildung der Erfindung vorgesehen, dass der Antrieb elektrisch betreibbar und/oder betrieben ist. Ein elektrischer Antrieb bietet hierbei den Vorteil, dass die Klemmschelle in eine automatisierte Bedienung, beispielsweise in eine automatisierte Steuerung einer die Klemmschelle aufweisenden Anlage, wie beispielsweise ein Extruder, insbesondere ein Zahnradextruder, eingebunden werden kann. So kann auch hierdurch die Sicherheit einer Bedienperson gesteigert werden, indem z. B. ein Öffnen der Klemmschelle lediglich dann erfolgt, wenn bei in den durch die Klemmschelle verbundenen Leitungen ein nicht gefährdender Druck, beispielsweise Umgebungsdruck vorherrscht. Dadurch, dass aufgrund des Hebelverschlusses durch den Antrieb lediglich geringe Bedienkräfte zum Verstellen des Hebelverschlusses aufzubringen sind, kann dieser einen geringen Bauraum in Anspruch nehmen. Der notwendige Bauraum ist dabei auch deutlich geringer als der Bauraum, den es bei der Ausführung einer Hydraulik bedürfen würde. Darüber hinaus ist im Vergleich zu einer Hydraulik auch kein regelmäßiger Austausch von Hydraulikflüssigkeit sowie -schläuchen notwendig, sodass ein geringerer Wartungsaufwand vorliegt. Ebenfalls erfolgt keine Kontamination der Umgebung, insbesondere der Umgebungsluft mit der Hydraulikflüssigkeit, welche in der Regel ein Hydrauliköl ist. Ein elektrischer Antrieb weist zudem einen geringeren Geräuschpegel auf und muss auch in den Ruhestellungen, hier insbesondere der Offenstellung und/oder Geschlossenstellung der Klemmschelle, nicht mit Energie versorgt werden.

In einer darüber hinaus überaus vorteilhaften Weiterbildung der Erfindung weist die Synchronisierungsmechanik zudem wenigstens ein, bevorzugt drehbar gelagertes, Synchronisierungselement, insbesondere eine Synchronisierungswelle auf, über welche die Schellarme, insbesondere mittelbar, miteinander verbunden sind. Das Synchronisierungselement, insbesondere in Form einer Synchronisierungswelle stellt hierbei eine konstruktiv vorteilhaft einfache und effektive Ausgestaltung dar, das Schwenken und/oder Drehen der Schellarme zu synchronisieren und somit stets simultan ablaufen zu lassen. Durch das in sich torsionssteife Synchronisierungselement, insbesondere in Form einer Synchronisierungswelle wird jedwedes Schwenken und/oder Drehen eines Schellarms - unmittelbar - auf den weiteren Schellarm übertragen.

Insbesondere im Zusammenhang mit der vorstehenden Weiterbildung stellt sich eine Ausführungsform der Erfindung als gewinnbringend dar, wenn das als eine Synchronisierungswelle ausgebildete Synchronisierungselement in einem, insbesondere gelenkseitig der Schellarme ausgebildeten Wellenlager, insbesondere einer Traverse, der Synchronisierungsmechanik drehbar angeordnet ist. Das Wellenlager umschließt die Synchronisierungswelle hierbei, abgesehen von den Endbereichen der Synchronisierungswelle, bevorzugt vollständig. So ist ein hoher Schutz der Synchronisierungswelle vor Beschädigungen sowie ein hoher Personenschutz vor der rotierenden Synchronisierungswelle gegeben.

In einer vielversprechenden Ausbildung der Erfindung weist die Synchronisierungsmechanik je Schellarm weiterhin wenigstens ein Koppelmittel auf, wobei ein jeweiliger Schellarm und das Synchronisierungselement, insbesondere mittelbar oder unmittelbar, über das wenigstens eine Koppelmittel miteinander verbunden sind. Das oder die Koppelmittel gewährleisten hierbei eine effiziente Anbindung der Schellarme an das Synchronisierungselement, insbesondere die Synchronisierungswelle, und ermöglichen somit das simultane Schwenken und/oder Drehen der Schellarme. Zudem lässt sich über das oder die Koppelmittel die Bewegungsart und/oder die Bewegungsrichtung eines jeweiligen Schellarms und des Synchronisierungselements aneinander anpassen.

Darüberhinausgehend ist in einer Ausführungsform der Erfindung vorgesehen, dass wenigstens ein Koppelmittel ein Koppelhebel ist, welcher, insbesondere unmittelbar, mit dem Synchronisierungselement und/oder, insbesondere mittelbar, mit einem der Schellarme verbunden ist. Es wird bevorzugt, dass die Koppelhebel und das Synchronisierungselement, bevorzugt die Synchronisierungswelle fest und/oder starr miteinander verbunden sind. Dies erfolgt typischerweise über eine kraft- und/oder formschlüssige Verbindung, wie z. B. eine Welle-Nabe-Verbindung. Es ist möglich, dass jeder Koppelhebel mittels einer solchen Verbindung an der Synchronisierungswelle befestigt ist. Eine denkbare Ausgestaltung beinhaltet beispielsweise eine Klemmverbindung, eine Verzahnung, eine Feder-Nut-Verbindung und/oder eine Verschraubung zwischen dem jeweiligen Koppelhebel und der Synchronisierungswelle.

Ferner ist es als gewinnbringend anzusehen, wenn in einer Weiterbildung der Erfindung wenigstens ein Koppelmittel eine Koppelstange ist, welche, insbesondere unmittelbar, mit einem der Schellarme, insbesondere mittelbar, mit dem Synchronisierungselement und/oder, insbesondere unmittelbar, mit einem der Koppelhebel verbunden ist. Die Verwendung einer Koppelstange ermöglicht dabei eine effektive Übertragung der Bewegung zwischen einem jeweiligen Schellarm und dem Synchronisierungselement über den mit dem entsprechenden Schellarm verbundenen Koppelhebel. Dadurch wird eine präzise und zuverlässige Synchronisierung der Bewegungen erreicht. Die Ausführung von Koppelstangen ermöglicht zudem eine flexiblere Anordnung der Schellarme und der Synchronisierungswelle und somit eine Anpassung an verschiedene Anforderungen und Betriebsbedingungen.

Als vorteilhaft zeichnet sich eine Ausgestaltung der Erfindung zudem dadurch aus, dass die einem jeweiligen Schellarm zugeordneten Koppelmittel untereinander und/oder ein jeweiliger Schellarm mit dem zugeordneten Koppelmittel über ein Koppelgelenk verbunden sind. Insbesondere ist hierbei eine jeweilige Koppelstange am mit der Koppelstange verbundenen Schellarm und/oder am mit der Koppelstange verbundenen Koppelhebel angelenkt. Über die Verbindung mittels eines Koppelgelenks lässt sich insbesondere die Bewegungsrichtung eines jeweiligen Schellarms und des Synchronisierungselements respektive der Koppelhebel aneinander anpassen und/oder der notwendige Bewegungsspielraum bereitstellen. Hierfür könnten ein zwischen einem Schellarm und einer Koppelstange angeordnetes Koppelgelenk und ein zwischen Koppelstange und Koppelhebel angeordnetes Koppelgelenk zueinander in Winkelstellung ausgeführte, insbesondere senkrecht aufeinander stehende Drehachsen aufweisen.

Die Erfindung lässt verschiedene Ausführungsformen zu. Zur weiteren Verdeutlichung ihres Grundprinzips ist eine davon in der Zeichnung dargestellt und wird nachfolgend beschrieben.

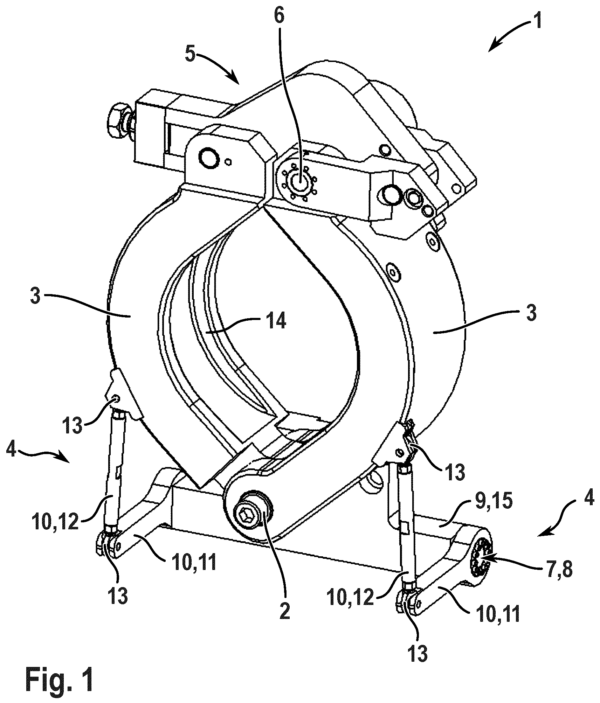

Diese zeigt in Figur 1 eine Ausführungsform einer erfindungsgemäßen Klemmschelle 1, insbesondere einer Flanschschelle zur kraft- und/oder formschlüssigen Verbindung zweier Leitungen über deren Flansche. Die Klemmschelle 1 weist hierbei zwei über das Gelenk 2 gegenüber einander schwenkbeweglich und/oder drehbeweglich ausgeführte Schellarme 3 auf, wobei die Schellarme 3 über eine Koppeleinrichtung miteinander verbunden und im Wesentlichen gekrümmt ausgebildet sind. Zum zumindest teilweisen Umfassen der Flansche weisen die Schellarme 3 zudem innenseitig ausgebildete Flanschaufnahmen 14 auf. Die Koppeleinrichtung ist zudem als Synchronisierungsmechanik 4 ausgeführt, welche ein stets simultanes Schwenken und/oder Drehen der beiden Schellarme 3 erzwingt.

Dies wird dadurch verwirklicht, dass die Synchronisierungsmechanik 4 ein Synchronisierungselement 7 aufweist, über welche die Schellarme 3 miteinander verbunden sind. Das Synchronisierungselement 7 ist speziell als Synchronisierungswelle 8 ausgeführt, die in dem Wellenlager 9 auf der gelenkseitigen Seite der Schellarme 3, d. h. auf der Seite, an der das Gelenk 2 angebracht ist, drehbar gelagert ist. Das Wellenlager 9 ist hierbei als Gleitlager ausgeführt, welches durch die Traverse 15 gebildet wird.

Zur Anbindung der Schellarme 3 an das Synchronisierungselement 7, hier also an die Synchronisierungswelle 8, weist die Synchronisierungsmechanik 4 je Schellarm 3 zwei Koppelmittel 10 auf, wobei eines der Koppelmittel 10 der Koppelhebel 11 ist, welcher unmittelbar mit dem Synchronisierungselement 7 verbunden ist. Das weitere Koppelmittel 10 je Schellarm 3 ist zudem die Koppelstange 12, welche unmittelbar mit dem zugehörigen Schellarm 3 über den unmittelbar mit der Koppelstange 12 verbundenen Koppelhebel 11 mittelbar an das Synchronisierungselement 7 angebunden ist. Darüber hinaus sind die einem jeweiligen Schellarm 3 zugeordneten Koppelmittel 10, hier demnach der Koppelhebel 11 und die Koppelstange 12 untereinander über das Koppelgelenk 13 verbunden. Zudem ist jeweils eines der Koppelmittel 10, dabei die Koppelstange 12 mit dem zugehörigen Schellarm 3, über das weitere Koppelgelenk 13 verbunden. Hierbei stehen die Drehachsen derje einem Schellarm 3 zugeordneten Koppelgelenke 13 senkrecht aufeinander.

Zum Öffnen und/oder Schließen der Klemmschelle 1 weist diese in dem dem Gelenk 2 gegenüberliegenden Bereich der Klemmschelle 1 den mit den Schellenarmen 3 verbundenen Hebelverschluss 5 auf, über welchen Schließ- und/oder Öffnungskräfte auf die Schellarme 3 übertragbar sind. Der Hebelverschluss 5 ist dabei im Speziellen als Kniehebelverschluss ausgeführt. Der Hebelverschluss 5 ist weiterhin mittels des hierbei elektrisch betriebenen Antriebs 6 verstellbar ausgebildet, sodass über den Hebelverschluss 5 eine Offenstellung und/oder eine Geschlossenstellung der Klemmschelle 1 und/der Schellarme 3 ausbildbar ist. In der Darstellung der Figur 1 ist die Klemmschelle 1 und/oder sind die Schellarme 3 im Besonderen in Geschlossenstellung aufgezeigt.

### BEZUGSZEICHENLISTE

- 1: Klemmschelle
- 2: Gelenk
- 3: Schellarme
- 4: Synchronisierungsmechanik
- 5: Hebelverschluss

- 6: Antrieb
- 7: Synchronisierungselement
- 8: Synchronisierungswelle
- 9: Wellenlager
- 10: Koppelmittel

- 11: Koppelhebel
- 12: Koppelstange
- 13: Koppelgelenk
- 14: Flanschaufnahme
- 15: Traverse

## Patentansprüche

1. Klemmschelle (1), zur kraft- und/oder formschlüssigen Verbindung zweier Leitungen über deren Flansche, mit zwei über ein Gelenk (2) gegenüber einander schwenkbeweglich und/oder drehbeweglich ausgeführten Schellarmen (3), wobei die Schellarme (3) über eine Koppeleinrichtung miteinander verbunden sind, **dadurch gekennzeichnet, dass** die Koppeleinrichtung eine, ein simultanes Schwenken und/oder Drehen beider Schellarme (3) erzwingende, Synchronisierungsmechanik (4) ist.

2. Klemmschelle (1) nach Anspruch 1, **dadurch gekennzeichnet, dass** die Klemmschelle (1) einen mit den Schellenarmen (3) verbundenen Hebelverschluss (5) aufweist, über welchen Schließ- und/oder Öffnungskräfte auf die Schellarme (3) übertragbar sind.

3. Klemmschelle (1) nach Anspruch 1 oder 2, **dadurch gekennzeichnet, dass** der Hebelverschluss (5) mittels eines Antriebs (6) verstellbar ausgebildet ist, sodass über den Hebelverschluss (5) wenigstens eine Offenstellung und/oder Geschlossenstellung der Klemmschelle (1) und/oder Schellarme (3) ausbildbar ist.

4. Klemmschelle (1) nach zumindest einem der vorhergehenden Ansprüche, **dadurch gekennzeichnet, dass** der Antrieb (6) manuell betreibbar und/oder betrieben ist.

5. Klemmschelle (1) nach zumindest einem der vorhergehenden Ansprüche, **dadurch gekennzeichnet, dass** der Antrieb (6) elektrisch betreibbar und/oder betrieben ist.

6. Klemmschelle (1) nach zumindest einem der vorhergehenden Ansprüche, **dadurch gekennzeichnet, dass** die Synchronisierungsmechanik (4) wenigstens ein Synchronisierungselement (7) aufweist, über welche die Schellarme (3) miteinander verbunden sind.

7. Klemmschelle (1) nach zumindest einem der vorhergehenden Ansprüche, **dadurch gekennzeichnet, dass** das Synchronisierungselement (7) eine Synchronisierungswelle (8) ist und diese Synchronisierungswelle (8) in einem Wellenlager (9) der Synchronisierungsmechanik (4) drehbar angeordnet ist.

8. Klemmschelle (1) nach zumindest einem der vorhergehenden Ansprüche, **dadurch gekennzeichnet, dass** die Synchronisierungsmechanik (4) je Schellarm (3) wenigstens ein Koppelmittel (10) aufweist, wobei ein jeweiliger Schellarm (3) und das Synchronisierungselement (7) über das wenigstens eine Koppelmittel (10) miteinander verbunden sind.

9. Klemmschelle (1) nach zumindest einem der vorhergehenden Ansprüche, **dadurch gekennzeichnet, dass** wenigstens ein Koppelmittel (10) ein Koppelhebel (11) ist, welcher mit dem Synchronisierungselement (7) und/oder mit einem der Schellarme (3) verbunden ist.

10. Klemmschelle (1) nach zumindest einem der vorhergehenden Ansprüche, **dadurch gekennzeichnet, dass** wenigstens ein Koppelmittel (10) eine Koppelstange (12) ist, welche mit einem der Schellarme (3), mit dem Synchronisierungselement (7) und/oder mit einem der Koppelhebel (11) verbunden ist.

11. Klemmschelle (1) nach zumindest einem der vorhergehenden Ansprüche, **dadurch gekennzeichnet, dass** die einem jeweiligen Schellarm (3) zugeordneten Koppelmittel (10) untereinander und/oder ein jeweiliger Schellarm (3) mit dem zugeordneten Koppelmittel (10) über ein Koppelgelenk (13) verbunden sind.
